# EUROPEAN PATENT APPLICATION

(11) **EP 3 065 281 A1**
(43) Date of publication of application: **07.09.2016**
(21) Application number: 15157562.8
(22) Date of filing: 04.03.2015
(51) Int. Cl.: H02M 3/158, H02M 3/157, H02M 1/00

(54) **Switched power converter with dual mode PWM / COT control**

(71) Applicant: Zentrum Mikroelektronik Dresden AG, 01109 Dresden (DE)
(72) Inventor: Kelly, Anthony, Co. Limerick (IE)
(74) Representative: Lippert, Stachow & Partner

(57) **Abstract**

The present invention relates to a power converter comprising a switched power stage configured to generate an output voltage from an input voltage and a controller configured to generate a pulsed control signal for switching the switched power stage in dependence of a voltage error signal. The voltage error signal is a difference between a reference voltage and an output voltage. The controller comprises a digital pulse width modulation control path and a digital constant on-time control path and wherein the controller is configured to toggle between a light load mode in which the digital constant-on-time is activated and a high load mode in which the digital PWM control path is activated. In contrast to the prior art where the constant on-time control path, specifically a continuous time comparator configured to compare the voltage error with a threshold to trigger a pulse of pre-set constant on-time, is a separate analog circuit consuming extra space and power, according to the present invention the constant-on time control path is designed digitally.

## Description

### FIELD OF THE INVENTION

The present invention relates to a power converter with dual mode pulse width modulation (PWM)/ constant on-time (COT) and a related method.

### BACKGROUND OF THE INVENTION

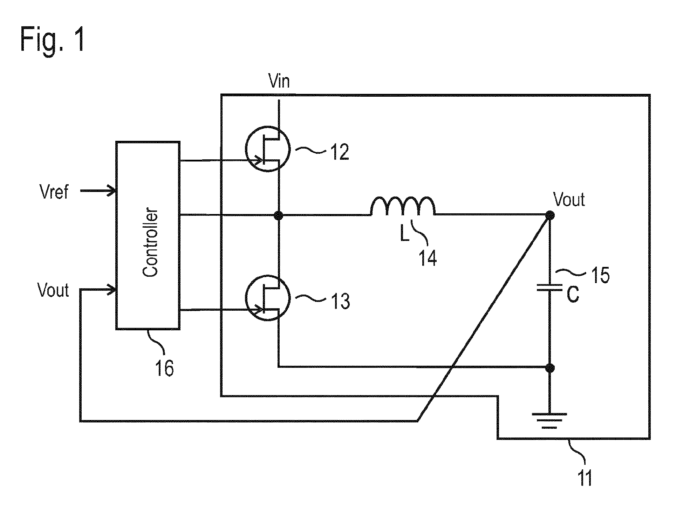

Switched DC-DC converters comprise a switchable power stage, wherein an output voltage is generated according to a switching signal and an input voltage. The switching signal is generated in a controller that adjusts the output voltage to a reference voltage. A buck converter is shown in Fig. 1. The switched power stage 11 comprises a dual switch consisting of a high-side switch 12 and a low-side switch 13, an inductor 14 and a capacitor 15. During a charge phase, the high-side switch 12 is turned on and the low-side switch 13 is turned off by the switching signal to charge the capacitor 15. During a discharge phase the high-side switch 12 is turned off and the low-side switch 13 is turned on to match the average inductor current to the load current.

In DC-DC converter applications Switched Mode Power Converters (SMPCs), may operate in different power modes applicable to different regions of the operating space. For example a buck converter may operate in continuous conduction mode (CCM) at moderate to high load and in discontinuous conduction mode (DCM) at light load to maximize efficiency across the entire load current range.

Digital control techniques may be employed to convey advantages in CCM such as non-linear control for improved transient response, whilst constant on-time (COT) control may be desirable in DCM operation due to several factors including Pulse Frequency Mode (PFM) operation.

However, designing several different modulation and control strategies is computationally expensive, costs more in terms of silicon area and consumes more current than would be desirable for energy efficiency and cost reasons.

Gildersleeve, M., H. P. Forghani-zadeh, et al. (2002). "A comprehensive power analysis and a highly efficient, mode-hopping DC-DC converter", IEEE Asia-Pacific Conference on ASIC, showed that "Mode-hopping was shown to be a good technique to achieve a high efficiency over a wide range of loads, but also has high complexity". This is due to the need to implement several different control circuits and the means to switch between them.

Therefore, it is desirable to develop a DC-DC SMPC that can easily be utilized in several modes of control and modulation. Specifically, it is desired that the control and modulation system is suitable for a) non-linear leading edge / trailing edge modulation PWM control and b) also suitable for COT control; without the need for extensive duplication of circuits.

### DISCLOSURE OF THE INVENTION

A solution to the problems stated above is achieved by power converter according to the independent apparatus claim and a related method according to the independent method claim. Dependent claims relate to further aspects of the present invention.

The present invention relates to a power converter comprising a switched power stage configured to generate an output voltage from an input voltage and a controller configured to generate a pulsed control signal for switching the switched power stage in dependence of a voltage error signal. The voltage error signal is a difference between a reference voltage and an output voltage.
The controller comprises a digital pulse width modulation control path and a digital constant on-time control path and wherein the controller is configured to toggle between a light load mode in which the digital constant-on-time is activated and a high load mode in which the digital PWM control path is activated. In contrast to the prior art where the constant on-time control path, specifically a continuous time comparator configured to compare the voltage error with a threshold to trigger a pulse of pre-set constant on-time, is a separate analog circuit consuming extra space and power, according to the present invention the constant-on time control path is designed digitally.

The power converter therefore may comprise an analog to digital converter (ADC) configured to sample the voltage error signal by employing oversampling at a significantly higher rate compared to a nominal switching rate of a PWM signal generated in the digital PWM control path. The ADC provides the digitized voltage error control signal to the digital constant on-time control path and the digital PWM control path. This allows very fine temporal precision. Thus common circuits may be used to design a controller that employs mode switching to provide high efficiency across a full range of load currents.

The constant on-time control path may be configured to trigger a pulse of the pulsed control signal when the digitized voltage error exceeds a threshold. Specifically, the constant on-time control path may be designed as a comparator that triggers a pulse of the pulsed control signal based on the sign of the digitized voltage error. The constant on-time control thus may thus trigger a new nominal PWM period or a pulse of pre-set constant on-time.

One aspect of the present invention relates to the digital PWM control path. The digital PWM control path may be configured to trigger a restart of a new nominal PWM period of a PWM signal generated in the digital PWM control path when a threshold based on a duty ratio, e.g. a duty ratio difference or the derivative of the duty ratio, within a PWM period exceeds a threshold. Thus, a PWM pulse is pulled forward in time compared to classic PWM operation. This is a non-linear PWM control action in high load mode. Hence, the digital PWM control path modulates the trailing edge as well as the leading edge of a PWM pulse.

One aspect of the present invention relates to mode switching. Due to the mode switching across load current range, this invention provides a flexible controller with lower complexity and cost, but with high efficiency.

The mode switching may employ comparators to detect when pre-determined thresholds have been crossed. The thresholds may be current e.g. average inductor current crossing one half of the ripple current value, or voltage e.g. control error exceeding a pre-determined maximum; and may suitably employ hysteresis. Other mode switching methods will be familiar to those skilled in the art and may also be readily employed.

Also, the duty cycle may be used as an input to an efficiency estimation block that may determine a suitable point for mode switching based upon the maximum value of the steady state duty cycle which is known to correspond to a maximum loss value. The steady state duty cycle used for estimation may be averaged, filtered or determined from a component of the PID controller.

Furthermore, an adaptive filter may be employed as an estimator to determine the optimum point for mode changes. Mode changes are not limited to PWM and COT mode as described, but may also include adding or dropping phases in a multi-phase configuration. The multi-phase configuration may be in a single Point of Load Converter (POL) and controller or may comprise several POLs and controllers operating in parallel with a common output voltage.

The system may include a common bus to provide setup information to the controllers and/or telemetry data indicating the status or value of various signals in the controller or control system, including the status of the mode controller.

The system may include components such as external resistors to configure the controller and/or may measure the voltage applied to pins of the controller IC in the configuration process.

The present invention further relates to control method for a power converter comprising a switched power stage configured to generate an output voltage from an input voltage according to a pulsed control signal controlling a switching of the switched power stage in dependence of a voltage error signal. The voltage error signal is a difference between a reference voltage and the output voltage. The method comprises toggling between a light load mode in which a digital constant-on-time is activated and a high load mode in which a digital PWM control path is activated.

The method may further comprise oversampling the voltage error at a significantly higher rate compared to a nominal switching rate of a PWM signal generated in the digital PWM control path and configured to provide a digitized voltage error control signal to the digital constant on-time control path and the digital PWM control path.

### BRIEF DESCRIPTION OF THE DRAWINGS

Reference will be made to the accompanying drawings, wherein
- Fig. 1: shows a prior art switching buck converter;
- Fig. 2: shows a block diagram of a dual mode PWM / COT controller connected to an analog front end;
- Fig. 3: shows a diagram showing load current, voltage error, duty cycle and PWM signal for a non-linear PWM mode; and
- Fig. 4: shows a diagram showing the control error, the sign of the control error and the pulse control signal for constant on-time operation.

### DETAILED DESCRIPTION OF THE INVENTION

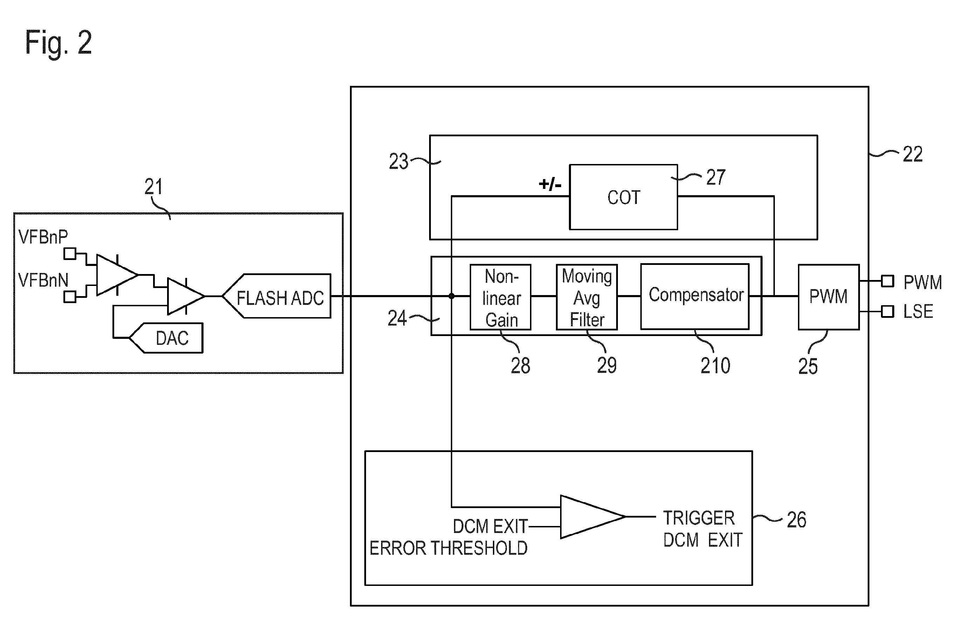

Fig. 2 shows a block diagram a block diagram of a dual mode PWM / COT controller 21 connected to an analog front end 22. The dual mode PWM / COT controller comprises a digital constant on-time control path 23, a digital PWM control path 24, a PWM generator 25 and mode switcher 26. The analog-front end comprises an ADC for digitizing the control error, i.e. a voltage error. The PWM generator 25 generates a PWM signal based on the on-time information and pulse position information generated either in the digital constant on-time control path 23 or in the digital PWM control path 24 for switching the switched power stage 11 as shown in Fig. 1. The mode switcher 26 determines an optimal point when to switch from light load mode in which the digital constant on-time control path 23 is activated to high load mode in which the digital PWM control path 24 is activated.

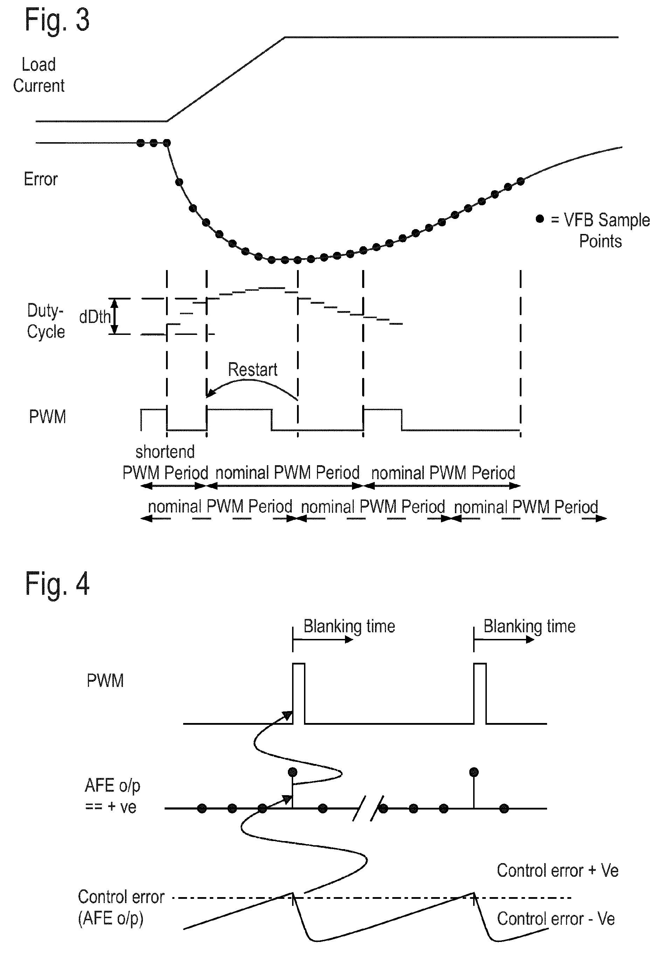

The digital control path 24 operates in non-linear PWM operation with a constant nominal frequency such that pulses of varying duty cycle, determined by the digital PWM control path are issued from the Pulse Width Modulation block (PWM). The occurrence of a load current step causes the controller to issue increasing duty cycle values. Once a threshold has been crossed it is determined that the digital PWM control path does not wait to issue the next PWM leading edge at the scheduled time corresponding to the nominal rate, but rather, it issues a new leading edge right away as shown in Fig. 3. The trailing edge is modulated with respect to the leading edge in the normal way. The threshold may be suitably determined from the duty cycle value, its derivative or combination thereof, or in another suitable manner. A restart mask may be applied to prevent re-occurrence of the restart for a specific period of time, such that they do not occur too close together. The digital PWM control path comprises a non-linear gain block 28, a moving average filter 29 and a compensator 210.

The controller switches modes to COT operation that is suitably employed when the power stage is in DCM, but may be employed in CCM also. Fig. 4 shows that a pulse is issued when the output voltage falls below the reference voltage and therefore the control error becomes positive. A continuous time comparator is traditionally employed to turn on the PWM Pulse at this moment with very high temporal precision. In digital PWM converters this comparator uses extra space and power. Alternatively a digital PWM may issue the COT pulse width at the next scheduled PWM leading edge time, but this leads to limit cycling of the PWM output pulses and increased output voltage ripple.

However, COT control in the controller shown in Fig. 2 is achieved by modulating the leading edge of the PWM pulse according to Fig. 4 with very fine temporal precision. As the ADC in the analog front end 22 oversamples the output voltage at a significantly higher rate than the nominal switching rate, a quasi-continuous time operation is possible.

The digital constant on-time control path 23 as shown in Fig. 2 is merely a comparator 27 triggering the restart function of the PWM according to the sign of the control error.

Thus, this invention provides a flexible controller with lower complexity and cost, with high efficiency due to the mode switching across load current range.

The mode switcher 26 employs comparators to detect when pre-determined thresholds have been crossed. The thresholds may be current e.g. average inductor current crossing one half of the ripple current value, or voltage e.g. control error exceeding a pre-determined maximum; and may suitably employ hysteresis. Other mode switching methods will be familiar to those skilled in the art and may also be readily employed.

## Claims

1. Power converter comprising:
a switched power stage (11) configured to generate an output voltage from an input voltage and
a controller (16, 21) configured to generate a pulsed control signal for switching the switched power stage in dependence of a voltage error signal, the voltage error signal being a difference between a reference voltage and the output voltage;
wherein the controller (16, 21) comprises a digital pulse width modulation control path (24) and a digital constant on-time control path (23) and wherein the controller (16, 21)is configured to toggle between a light load mode in which the digital constant-on-time is activated and a high load mode in which the digital PWM control path is activated.

2. The power converter according to claim 1 further comprising an analog to digital converter configured to sample the voltage error signal by employing oversampling at a significantly higher rate compared to a nominal switching rate of a PWM signal generated in the digital PWM control path and configured to provide a digitized voltage error control signal to the digital constant on-time control path and the digital PWM control path.

3. The power converter according to claim 1 or 2, wherein the digital PWM control path is configured to trigger a restart of a new nominal PWM period of a PWM signal when a threshold based on a duty ratio within a PWM period exceeds a threshold.

4. The power converter according to claim 3, wherein the threshold is based on a difference or a derivative of the duty ratio.

5. The Power converter according to claim 3, wherein the digital PWM control path is configured to prevent a re-occurrence of a restart of the new nominal PWM for a specific period of time.

6. The power converter according to any of claims 2 to 5, wherein the constant on-time control path is configured to trigger a pulse of the pulsed control signal when the digitized voltage error exceeds a threshold.

7. The power converter according to claim 6, wherein the constant-on time control path is a comparator and configured to compare the digitized voltage error with a threshold and configured to trigger a new nominal PWM period according to a sign of the digitized control error.

8. The power converter according to claim 6, wherein the constant-on time control path is a comparator and configured to compare the digitized voltage error with a threshold and configured to trigger a pulse of pre-set constant on-time according to a sign of the digitized control error.

9. The power converter according to any of claims 1 to 8, wherein the controller comprises a comparator to detect when a pre-determined threshold has been exceeded for toggling between the light load mode and the high load mode.

10. The power converter according to claim 9, wherein the pre-determined threshold is based on one of current, average inductor current exceeding one half of ripple current value, voltage.

11. The power converter according to claim 10, wherein the pre-determined threshold employs hysteresis.

12. The power converter according to any of claims 1 to 8, wherein the controller comprises an adaptive filter configured to determine an optimum point for toggling between the light load mode and the high load mode.

13. The power converter according to any of claims 1 to 11, wherein the controller comprises an efficiency estimator configured to determine an optimum point for toggling between the light load mode and the high load mode based on a maximum value of a steady state duty cycle.

14. The power converter according to any of claims 1 to 13, wherein the controller is further configured to toggle between phases in a multiphase-configuration by adding or dropping phases.

15. A control method for a power converter comprising a switched power stage configured to generate an output voltage from an input voltage according to a pulsed control signal controlling a switching of the switched power stage in dependence of a voltage error signal, the voltage error signal being a difference between a reference voltage and the output voltage, the method comprising:
toggling between a light load mode in which a digital constant-on-time is activated and a high load mode in which a digital PWM control path is activated.
